# EUROPEAN PATENT APPLICATION

(11) **EP 0 992 325 A2**
(43) Date of publication of application: **12.04.2000**
(21) Application number: 99119810.2
(22) Date of filing: 06.10.1999
(51) Int. Cl.: B27B 25/00

(54) **Automatic pivoted loader for feeding wood bases to improved cutting devices**

(30) Priority: 09.10.1998 IT VR980088
(71) Applicant: Mantovani, Paolo, 35100 Padova (IT); Mantovani, Paola, 37060 Maccacari di Gazzo Veronese (IT)
(72) Inventor: Mantovani, Paolo, 35100 Padova (IT); Mantovani, Paola, 37060 Maccacari di Gazzo Veronese (IT)
(74) Representative: Savi, Alberto

(57) **Abstract**

The device consists of a loader that allows automatic feeding of pieces of wood towards cutting devices in order to machine profiled strips during consecutive cutting cycles.

Automatic pivoted loader (1) fundamentally consists of base support (3) acting as a guide template that carries components (6,7) used to feed the workpiece (2) towards the cutting line.

Components (6,7) consist of two independently controlled pivoted units placed in a symmetric and mirror layout and including feed devices such as belts (15) or the like that allow to position and tighten the workpiece to be cut (2) and also to feed it at regular intervals, towards the cutting line (2).

## Description

This industrial invention patent proposes an automatic pivoted loader for feeding wood bases to improved cutting devices.

It consists of a newly designed automatic loader that is used to make profiled strips from wood bases where the wood bases are subject to a special type of automatic feed mechanism using a pair of independently controlled pivoting clamps.

The bases can be made to feed at right angles towards the cutting line or in reciprocating movements that allow the base to feed in cycles first from one side and then from the other.

As is known the market offers various types of woodworking machines which are conceived to perform a great variety of tasks depending on the effect to be obtained.

One of the woodworking processes most in demand when producing furniture, and in particular in the period-style furniture sector, is to make profiled or molded strips from rough wood bases, strips, for example, where straight sections alternate with curved sections.

This type of process is particularly suited and specifically required for making the profiled parts of chairs, such as legs, backs or the like, or for finish trim on furniture such as, for example to make turned columns, top ornamentations, moldings or other similar accessories.

Several difficulties are encountered when making these furniture components because it is necessary to cut rough wood bases by feeding the blade along paths that alternate curving and straight sections or where these are mixed depending on the shape of the product to be made.

It is clear that this all causes substantial difficulties, especially when we consider that no machines exist whereby these procedures are automated and it is necessary to turn to manual feed methods.

Naturally manually feeding the piece to be cut means that final products are imperfect and uneven and unsuited for assembly-line production of furniture with constant characteristics. Equally important problems regard safety which must be a priority concern in this sector and for these specific cutting procedures.

The object of this invention is to propose a device that automates feeding of pieces of wood towards cutting devices so that profiled strips can be machined during consecutive processing cycles.

Another object of this invention is to make a highly versatile feed device that includes pivoted mechanisms to permit cyclic and alternating feed of one of the sides of the workpiece with respect to the opposite side in order to machine profiled strips with different cutting depths.

According to the invention, the device also provides for mechanisms that function to keep the base guide template in perfect alignment and other mechanisms that keep the cutting blade in its perfect working position.

These objects, advantages and special functions are all achieved, according to the invention, by an automatic pivoted loader for feeding wood bases to improved cutting devices, characterized by the presence of a base support acting as a guide template on which the feeding components of the workpiece to be machined are mounted, consisting of two independently controlled pivoted units, each placed in a symmetric and mirror layout, including feed devices such as belts or the like that allow to position and tighten the workpiece to be cut and also to feed it, at regular intervals, towards the cutting line.

Each of the pivoted units includes drive components for moving the belt feed lines and control mechanisms, such as encoders or the like, to control work phases and procedures.

The invention also provides for controlled feed mechanisms for the guide template and other mechanisms that cause perfect alignment of the cutting blade.

Other characteristics and details of this invention can be better understood from the following description, given as an example and not limiting, that makes reference to the attached drawings where:
- fig. 1 gives an overall schematic and plan view of the automatic loading device according to this invention;
- fig. 2 schematically gives a close-up view of one of the two feed units;
- fig. 3 gives a schematic side view of the feed unit mounted on the guide template;
- fig. 4 schematically illustrates one view of the guide template's feed mechanisms;
- fig. 5 gives a view of the loading device placed between the feed unit and the cutting unit in a first work phase;
- fig. 6 gives a schematic view of the same loading device placed between the feed unit and the cutting unit in a second work phase;
- fig. 7 gives a schematic view of the mechanisms that ensure perfect working alignment of the cutting tool;
- fig. 8 shows a schematic perspective view of the means in Fig. 7.

In reference to these attached illustrations number 1 is used to indicate the complete assembly of an automatic pivoted loader or carriage according to this invention designed to feed wood bases 2 towards the cutting devices of a sawing machine.

Automatic loader 1 basically consists of a carriage composed of mobile guide template 3 that includes horizontal plane 3a supported below by two templates 4 and 5 of which the first rear template has a straight shape whereas the second, front template, has a profiled shape according to the shape of the strips to be made.

The front edge of horizontal plane 3a overlaps front template 5, taking on the same shape.

Two feed units 6 and 7 are installed above horizontal plane 3a of guide template 3. These constitute the operating components of the automatic loader.

Feed units 6 and 7 are symmetric and placed in a mirror layout along the two lateral opposite segments of plane 3a.

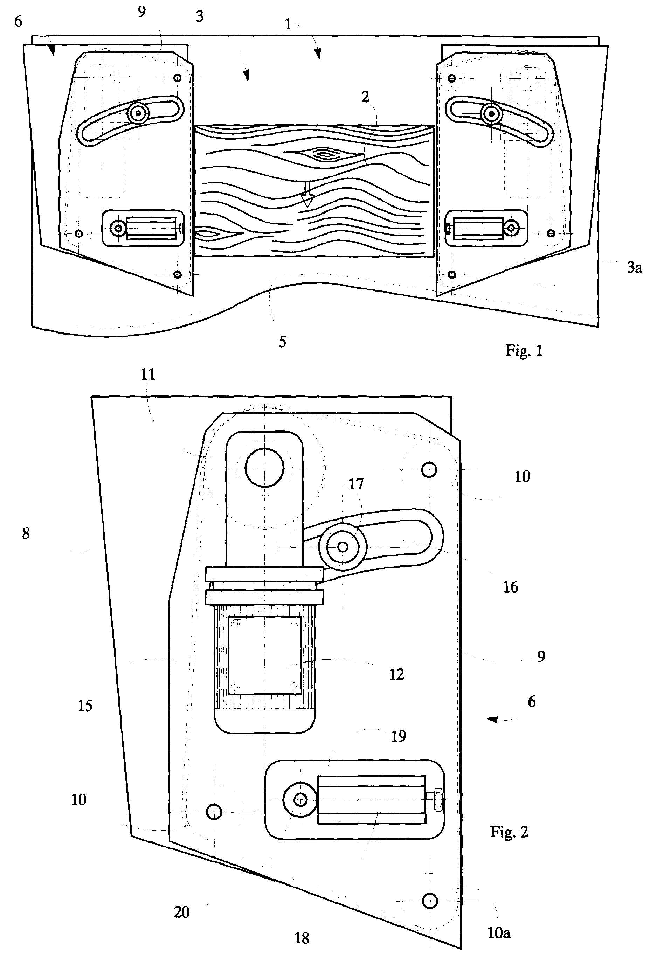

Each of the feed units, one of which, meaning group 6, is represented in detail in figure 2, includes support plate 8 fastened onto horizontal plane 3a. The actual feed device is positioned on this plate.

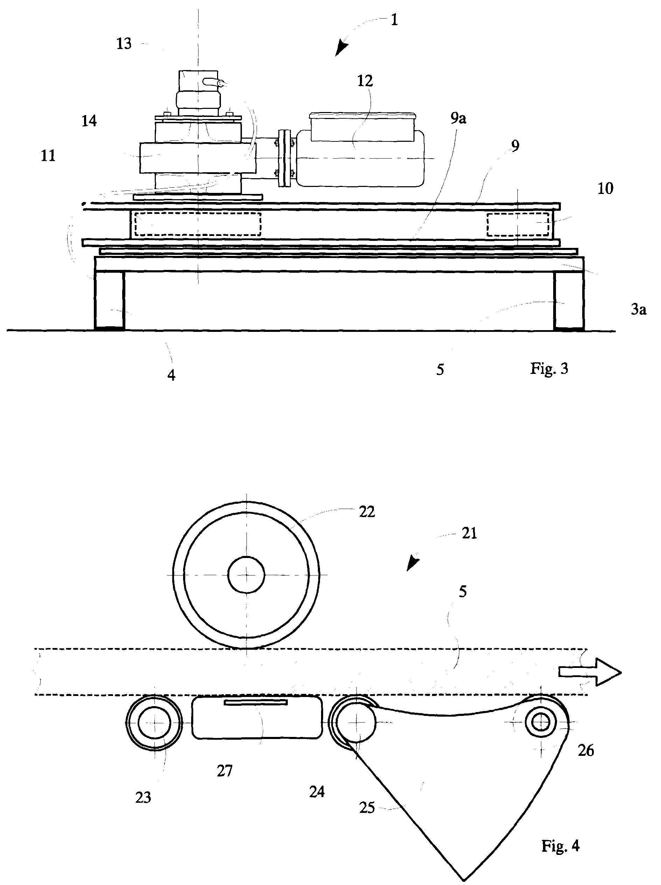

As figure 3 shows the feed device is composed of two horizontal stacked plates 9 and 9a having a basically quadrilateral perimeter, between which are placed idle wheels 10 and one driven wheel 11.

Wheel 11 is powered by geared motor 12 or similar device, controlled by encoder 13 placed next to drive unit 14.

Conveyor belt 15 is stretched between idle wheels 11 and driven wheel 12 and causes forward movement of the workpiece to be cut because the side facing the inside of the device juts slightly outside with respect to the edge of the support plates so that it comes in contact with the side of the workpiece, compressing it.

Figure 2 illustrates the particular layout of the feed device on plate 8 that supports it, layout that permits the device itself to feed the workpiece being processed in a straight line or to feed it alternatively on the right side and the left side, varying the depth of the relative cut.

In the first place the feed device has an angular rotation point positioned in correspondence with one of the idle wheels 10, in this case indicated by 10a, which can be adjusted around slot 16 in the form of an arc of a circle present in the rear part.

Slot 16 is intercepted by locking mechanism 17 using a screw or similar system that allows the device to be locked at the preset angular inclination.

And, finally, the lateral position of the feed device compared to the workpiece is controlled by a hydraulic thrust mechanism consisting of piston 18 placed inside opening 19 and acting against fixed pin 20 integral with support plate 8.

Piston 18, during its opening phase, pushes the feed device to the inside by acting against fixed pin 20 so that it clamps the workpiece being processed against the second feed unit that is placed, and performs as has been said, in a mirror layout compared to that which has been described.

It is important to note that both the two mirror units 6 and 7 that compose the automatic loader include the same mechanisms and the same components as described so that the two units act independently and separately even though they can be mutually synchronized with each other.

The position of piece of wood 2 on the loader is as illustrated in figure 1: it rests on horizontal plane 3a and is retained by the two mirror feed units 6 and 7 which clamp the workpiece between themselves and at cyclic controls make it feed forward as conveyor belts 15 advance.

Loader work cycles are calculated in function of cutting times. As a consequence each forward movement corresponds to one cut of the workpiece to form a multitude of strips.

The carriage including the above-described feed and loading mechanisms is powered by the action of a feed and cutting unit that is globally indicated by number 21 in figure 4.

This unit includes drive wheel 22 to which idle roller sets 23 and 24 are opposed. The second set also supports guide base 25, hinged to the axis of roller 24, which has at its end another idle roller 26 that functions as a guide while the carriage feeds forward.

In fact the guide rollers are separated from drive wheel 22 by the width of shaped template 5 so that the template and the carriage that supports it can be pulled forward and backward, permitting blade 27 to cyclically cut strips from the base that is made to advance by units 6 and 7.

A device including other mechanisms that determine the perfect working position of the cutting blade is also part of the invention in question.

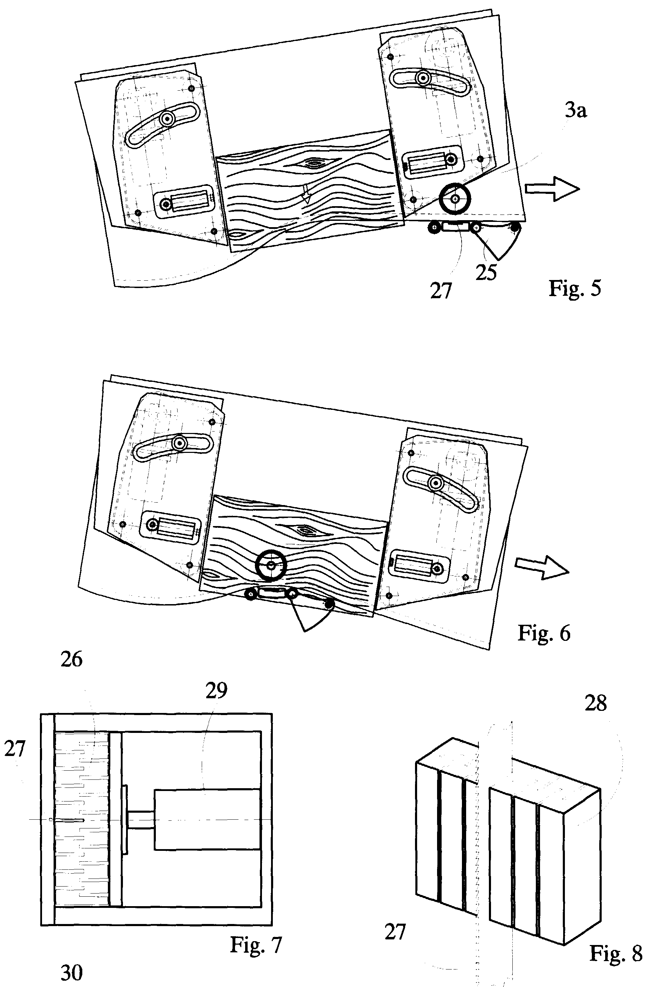

As figures 7 and 8 show these mechanisms consist of bar 28, made of anti-friction material, with a basically parallelepiped shape and with a series of vertical cuts into one of which band saw blade 27 is introduced.

Bar 28 can move sideways and be clamped in position, when the band saw blade is taut, by a rear piston that acts inside seat 30.

We shall now briefly illustrate an operating example of the mechanisms described.

First of all piece of wood, 2, is introduced onto horizontal support plane 3a between the two feed units 6 and 7 which are not yet locked in place.

Once piece 2 is introduced pistons 18 are actuated to laterally clamp the piece which remains clamped between the feed belts.

At this point the cuffing blade is stretched taut and locked in position by bar 28 pushed by piston 29.

Now the machine's work cycle is started. This calls for a first forward movement by piece of wood 2 powered by movement of bands 15 and simultaneous start of rotation of drive wheel 22.

Now the carriage advances, pulled by drive wheel 22 opposed to rollers 23 and 24 while cutting is guided by roller 26 which moves in a motion that copies the shape of template 5, varying the angular position of the carriage itself with respect to the cutting blade.

Once the workpiece has been cut roller 22 reverses rotation so that the carriage can retract in order to start a new cycle after feeding the piece of wood forward again.

The loader in question has been described and illustrated according to a preferred solution but an expert technician in this sector could provide for several variations that are to be considered to be included within the area of protection of the invention.

## Claims

1. Automatic pivoted loader for feeding wood bases to improved cutting devices characterized by the presence of a base support acting as a guide template on which the feeding components of the workpiece to be machined are mounted, consisting of independently controlled pivoted units, each placed in a symmetric and mirror layout, including feed devices such as belts or the like that allow to position and tighten the workpiece to be cut and also to feed it, at regular intervals, towards the cutting line.

2. Automatic pivoted loader according to the previous claim characterized by the fact that each of these pivoting units includes the drive components for moving the belt feed lines and control mechanisms such as encoders or the like to control work phases and procedures.

3. Automatic pivoted loader according to the previous claims characterized by the fact that controlled feed mechanisms for the guide template and other mechanisms are also provided and that cause perfect alignment of the cutting blade.

4. Automatic pivoted loader according to the previous claims characterized by the fact that the automatic loader consists of a carriage composed of a mobile guide template (3) that includes horizontal plane (3a) supported below by two templates (4, 5) with at least the front template having a profiled shape according to the shape of the strips to be made.

5. Automatic pivoted loader according to the previous claims characterized by the fact that the front edge of horizontal plane (3a) overlaps the front template (5), taking on the same shape.

6. Automatic pivoted loader according to the previous claims characterized by the fact that two feed units (6,7), which constitute the working components of the automatic loader, are installed above horizontal plate (3a) of guide template (3).

7. Automatic pivoted loader according to the previous claims characterized by the fact that these feed units (6,7) are symmetric and placed in a mirror layout along the two lateral opposite segments of plane (3a) and by the fact that each of the feed units includes support plate (8) fastened on to horizontal plane (3a) on which plate the actual feed device is positioned.

8. Automatic pivoted loader according to the previous claims characterized by the fact that the feed device is composed of two horizontal stacked plates (9, 9a) with a basically quadrilateral perimeter, between which are placed idle wheels (10) and one driven wheel (11) powered by geared motor (12) or similar device and controlled by encoder (13) placed next to drive unit (14).

9. Automatic pivoted loader according to the previous claims characterized by the fact that conveyor belt (15) is stretched between idle wheels (11) and driven wheel (12) and causes forward movement of the workpiece to be cut.

10. Automatic pivoted loader according to the previous claims characterized by the fact that the lateral position of the feed device compared to the workpiece is controlled by a hydraulic thrust mechanism consisting of piston (18) placed inside opening (19) and acting against fixed pin (20) integral with support plate (8).

11. Automatic pivoted loader according to the previous claims characterized by the fact that this carriage including the feed and loading mechanisms is powered by the action of a feed and cutting unit (21) including a drive wheel (22) to which sets of idle rollers are opposed (23, 24), the second of which also supports a guide base (25) hinged to the axis of roller (24) and including at its end another idle roller (26) which functions as a guide while the carriage feeds forward.

12. Automatic pivoted loader according to the previous claims characterized by the fact that it includes other mechanisms that determine the perfect working position of cutting blade (8) consisting of bar (28) made of anti-friction material and with a basically parallelepiped shape, with a series of vertical cuts in one of which band saw blade (27) is introduced.

13. Automatic pivoted loader according to the previous claims characterized by the fact that bar (28) can be moved sideways and be clamped in position by a rear piston acting inside seat (30) when the band saw blade is stretched taut.
